# FASCICULE DE BREVET EUROPEEN

(11) **EP 0 301 971 B1**
(45) Date de publication et mention de la délivrance du brevet: **01.09.1993**
(21) Numéro de dépôt: 88401971.2
(22) Date de dépôt: 29.07.1988
(51) Int. Cl.: B60K 35/00, B60Q 3/04

(54) **Système d'aide à la conduite pour véhicule automobile**
Hilfsvorrichtung für die Steuerung eines Motorfahrzeuges
Drive aid system for a motor vehicle

(30) Priorité: 30.07.1987 FR 8710788
(43) Date de publication de la demande: 01.02.1989
(73) Titulaire: REGIE NATIONALE DES USINES RENAULT, 92109 Boulogne-Billancourt (FR)
(72) Inventeur: Gueguen, Yves, F-92100 Boulogne (FR); Marc, Philippe, F-95210 Saint-Gratien (FR)
(74) Mandataire: Ernst-Schonberg, Michel

(56) Documents cités:
- FR-A- 2 257 194
- FR-A- 2 374 182
- US-A- 3 946 827

## Description

La présente invention se rapporte à un système d'aide à la conduite pour véhicule automobile, comprenant une unité de traitement d'informations à microprocesseur, un écran de visualisation d'informations connecté à ladite unité et un dispositif de commande pour recueillir de la part du conducteur des ordres de commande pour piloter l'affichage sur l'écran.

On a déjà réalisé des systèmes d'aide à la conduite du type précédent. Ces systèmes traitent trois séries d'informations. Une première série d'informations est constituée par des informations propres au véhicule et données par des capteurs. Une seconde série est constituée par des informations préenregistrées, embarquées et stockées dans une mémoire de masse. Une troisième série est constituée par des informations extérieures au véhicule.

Le système que décrit le brevet français FR-A-2 570 037 comprend un écran cathodique pour l'affichage des images, un écran tactile superposé à l'écran cathodique pour recueillir de la part du conducteur, les ordres de commande correspondant à l'image, et une unité de traitement informatique gérant l'écran cathodique, l'écran tactile, et des périphériques annexes. La sélection d'options (menu) s'effectue par l'intermédiaire de symboles ou icônes apparaissant sur l'écran. L'utilisation de ce système est malaisée.

L'invention a pour objet de fournir un système de commande intéractif pouvant s'appliquer à toutes les fonctions non prioritaires pour la conduite. Ce système de commande permet de réduire les temps de manipulation et de détournement du regard en optimisant les pointages, les désignations. Il améliore la sécurité et le confort du dialogue.

Le système selon l'invention est caractérisé par le fait qu'il comprend sous le volant un organe de commande du déplacement d'un curseur dans le champ de l'écran.

Selon une caractéristique, il consiste à former sur l'écran une partie dédicacée présentant des icones représentant une fonction du logiciel et une partie polyvalente présentant des champs et à déplacer le curseur d'un champ à l'autre à l'aide dudit organe de commande.

Selon la caractéristique, le système selon la revendication 1, caractérisé par le fait que l'organe de commande sous volant comporte des moyens pour déplacer le curseur suivant quatre directions et pour valider un ordre déterminé par la position du curseur et un poussoir de sélection des prestations.

L'invention va maintenant être décrite avec plus de détail en se référant à un mode de réalisation donné à titre d'exemple et représenté par les dessins annéxés sur lesquels :
- la figure 1 est une vue du poste de conduite d'un véhicule équipé du système selon l'invention.
- la figure 2 montre l'architecture générale du système.
- la figure 3 est une vue de la commande sous volant servant à commander le système selon l'invention.
- la figure 4 est un schéma de détail de l'écran de visualisation faisant partie du système.

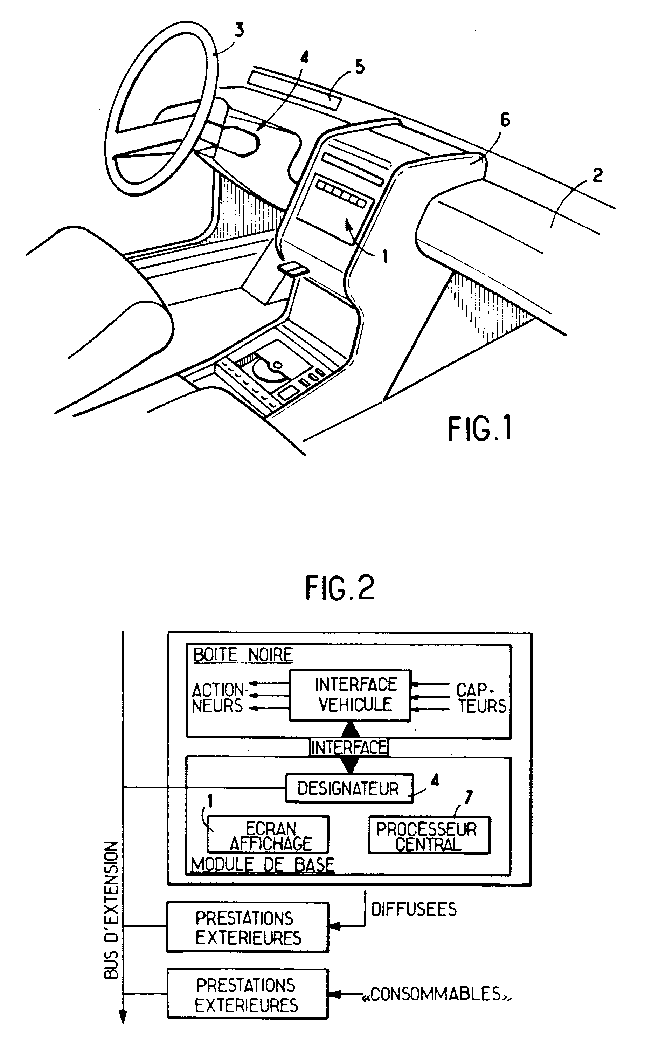

Sur la figure 1, l'écran 1 est monté sur la partie centrale d'une planche de bord 2, à droite du volant 3 sous lequel est positionné un organe de commande d'affichage ou désignateur 4, servant à commander le déplacement d'un curseur dans le champ d'un écran de visualisation d'informations 1.

La planche de bord 2 comporte une bande horizontale d'affichage 5 sur laquelle apparaissent les informations "planche de bord", affichages permanents réglementaires du véhicule.

L'écran 1 est avantageusement monté sur le bloc-console 6 situé dans la partie médiane du véhicule et faisant saillie sur la planche de bord, qui le surelève et l'avance vers les occupants de l'habitacle, de façon à assurer une bonne visibilité.

Les informations sont sélectionnées, par choix successifs d'options ou de précisions, concrétisés par un ou des appuis sur le désignateur. Il en résulte une méthode de sélection rapide et extrêmement simple, permettant un vulgarisation très large et un apprentissage très restreint.

La figure 2 montre l'architecture générale du matériel embarqué et les interdépendances. L'écran 1 et l'organe de commande sous volant 4 sont reliés à une unité centrale à microprocesseur 7 qui regroupe des cartes électroniques et des mémoires.

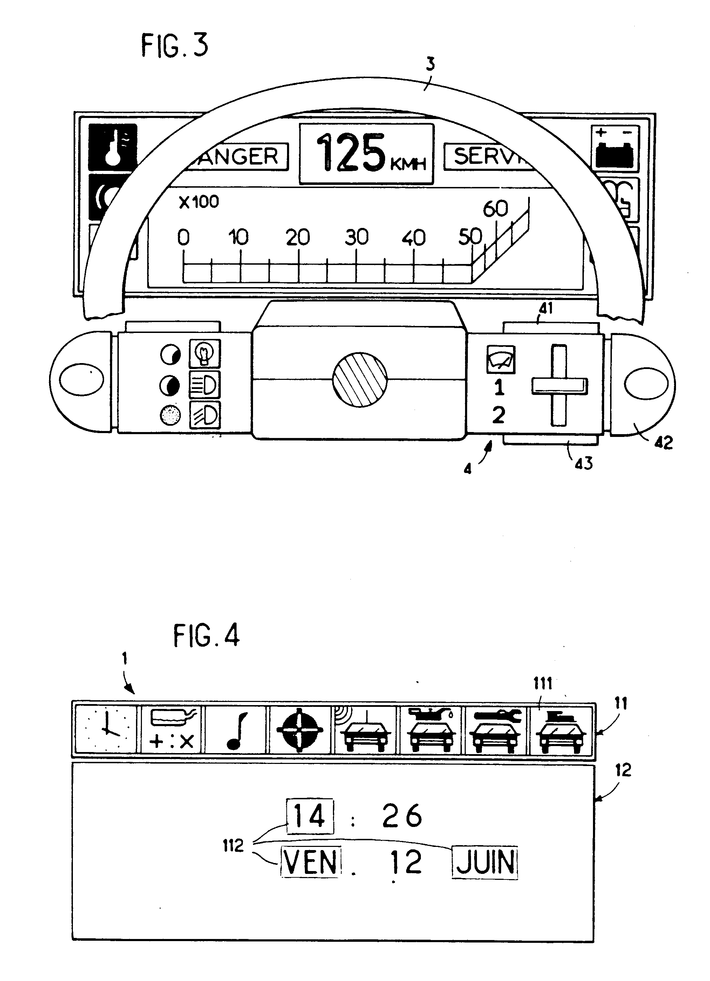

La figure 4 montre une représentation de l'écran 1 qui comporte une partie dédicacée 11 (motifs fixes) qui permet les choix de base et les prestations demandées par l'utilisateur et une partie polyvalente 12 qui présente des informations dynamiques et propose des choix au conducteur. L'écran dédicacé présente des icônes 111 qui sont des symboles graphiques représentant une fonction du logiciel.

L'afficheur polyvalent est divisé en champs 112. Chaque champ correspond à une action potentielle s'il est sélectionné. Les champs sont autant que possible disposés suivant des horizontales et des verticales. Une information comme la température extérieure par exemple qui n'est pas susceptible de modification ou de choix ne constituera pas un champ.

L'afficheur peut être alphanumérique ou graphique.

La figure 3 montre une représentation de l'organe de commande de l'affichage 4 qui est une commande adaptée au milieu automobile et qui s'intègre dans le poste de conduite de façon ergonomique. Un levier à micro contacts, comme présenté sur la figure est un bon exemple de réalisation.

Ce désignateur 4 dispose d'un poussoir de sélection 41 (commutateur) permettant de passer de la partie dédicacée à la partie polyvalente de l'afficheur et vice versa. Grâce à un levier 42 oscillant de forme demi-sphèrique, ce désignateur permet quatre mouvements possibles permettant de manipuler un curseur 112 qui sera déplacé d'un champ à l'autre suivant les horizontales et les verticales.

En pressant un levier 42, on choisit ou on valide la fonction du logiciel determinée par l'icône ou le champ où se trouve le curseur au moment de la validation.

Un poussoir "conseil" 43 permet à l'utilisateur d'obtenir les informations sur la commande qu'il vient d'exécuter ou sur les commandes potentielles qu'il peut sélectionner.

A la grande facilité d'utilisation et sa polyvalence, le poste de conduite selon l'invention apporte une simplification appréciable des circuits électriques au niveau du tableau de bord, pour la suppression des boutons de commande classiques remplacés par la combinaison de l'écran, des illustrations programmées où apparaissent les différentes commandes, et d'un désignateur.

## Revendications

1. Système d'aide à la conduite pour véhicule automobile comprenant une unité de traitement d'informations à microprocesseur (7) un écran (1) de visualisation d'informations connecté à ladite unité et un dispositif de commande pour receuillir de la part du conducteur les commandes pour piloter l'affichage sur l'écran, caractérisé par le fait qu'il comprend, sous le volant (3), un organe de commande (4) du déplacement d'un curseur (112) dans le champ de l'écran (1).

2. Système selon la revendication 1, caractérisé par le fait qu'il consiste à former sur l'écran (1) une partie dédicacée (11) présentant des icones (111) représentant une fonction du logiciel et une partie polyvalente (12) présentant des champs (112) et à déplacer le curseur (112) d'un champ à l'autre à l'aide dudit organe de commande (4).

3. Système selon la revendication 1 ou 2, caractérisé par le fait que l'organe de commande (4) sous volant comporte des moyens (42) pour déplacer le curseur suivant quatre directions et pour valider un ordre déterminé par la position du curseur (112) et un poussoir de sélection des prestations (41).

4. Système selon l'une quelconque des revendications précédentes, caractérisé par le fait que les moyens pour déplacer le curseur sont constitués par un levier oscillant.

## Claims

1. Driving assistance system for a motor vehicle comprising a microprocessor information processing unit (7), a screen (1) for the display of information linked to this unit and a control device for receiving commands from the driver in order to control the screen display, characterized in that it comprises, below the steering wheel (3), a control member (4) for the movement of a cursor (112) in the field of the screen (1).

2. A system as claimed in claim 1, characterized in that it consists in forming on the screen (1) a dedicated portion (11) displaying icons (111) representing a software function and a multi-purpose portion (12) having fields (112) and in using the control member (4) to move the cursor (112) from one field to another.

3. A system as claimed in claim 1 or 2, characterized in that the control member (4) below the steering wheel comprises means (42) for moving the cursor in four directions and for validating an order determined by the position of the cursor (112) and a push button for the selection of services (41).

4. A system as claimed in any one of the preceding claims, characterized in that the means for displacing the cursor are formed by an oscillating lever.

## Patentansprüche

1. Hilfsvorrichtung für die Steuerung eines Kraftfahrzeuges, mit einer Einheit zur Verarbeitung von Informationen mittels eines Mikroprozessors (7), mit einem Bildschirm (1) zur Anzeige der Informationen, der mit der Einheit verbunden ist und mit einer Steueranordnung zur Eingabe von Befehlen seitens des Fahrers, welche die Darstellungen auf dem Bildschirm steuern, dadurch gekennzeichnet, daß sie unterhalb des Lenkrades (3) ein Steuerteil (4) für die Verschiebung eines Cursors (112) im Feld des Bildschirms (1) aufweist.

2. Vorrichtung nach Anspruch 1, dadurch gekennzeichnet, daß sie darin besteht, auf dem Bildschirm (1) einen besonderen Abschnitt (11) mit Icons (111) zu bilden, die die Funktionen der Schaltung darstellen und einen Mehrfach-Abschnitt (12) zu bilden, mit Feldern (112) sowie darin, den Cursor (112) von einem Feld zum anderen mittels des Steuerteils (4) zu verschieben.

3. Vorrichtung nach Anspruch 1 oder 2, dadurch gekennzeichnet, daß das Steuerteil (4) unter dem Lenkrad eine Anordnung (42) aufweist, um den Cursor in vier Richtungen zu verschieben und um einen durch die Stellung des Cursors (112) ausgewählten Befehl durchzufuhren sowie eine Leistungs-Wähltaste (41) aufweist.

4. Vorrichtung nach einem der vorhergehenden Ansprüche, dadurch gekennzeichnet, daß die Anordnung zur Verschiebung des Cursors aus einem beweglichen Hebel besteht.
